# EUROPEAN PATENT SPECIFICATION

(11) **EP 2 835 609 B1**
(45) Date of publication and mention of the grant of the patent: **06.06.2018**
(21) Application number: 13772115.5
(22) Date of filing: 02.04.2013
(51) Int. Cl.: F28D 15/02, G21C 15/18

(54) **LOOP THERMOSIPHON EMERGENCY COOLING SYSTEM**
NOTKÜHLSYSTEM MIT SCHLEIFENTHERMOSIPHON
SYSTÈME DE REFROIDISSEMENT D'URGENCE À BOUCLE THERMOSIPHON

(30) Priority: 06.04.2012 JP 2012087466
(43) Date of publication of application: 11.02.2015
(73) Proprietor: Fujikura Ltd., Tokyo 135-8512 (JP)
(72) Inventor: MOCHIZUKI, Masataka, Tokyo 135-8512 (JP); SINGH, Randeep, Tokyo 135-8512 (JP); MATSUDA, Masahiro, Tokyo 135-8512 (JP)
(74) Representative: TBK
(86) International application number: PCT/JP2013/060095
(87) International publication number: WO 2013/151049

(56) References cited:
- WO-A1-2007/119783
- DE-A1-102007 038 909
- GB-A- 2 173 413
- JP-A- H0 387 561
- JP-A- H0 387 561
- JP-A- H0 472 597
- JP-A- H01 252 898
- JP-A- H05 248 777
- JP-A- 2003 042 673
- JP-A- 2004 245 566
- US-A- 3 935 063
- US-A1- 2012 051 489

## Description

### TECHNICAL FIELD

This invention relates to an emergency cooling system using a loop thermosyphon for circulating working fluid transporting heat between an evaporating portion and a condensing portion.

### BACKGROUND ART

The thermosyphon is a heat transfer device comprised of a sealed conduit and a working fluid encapsulated therein such as water, alcohol or ammonium. In the thermosyphon, a heat transportation is provided by an vaporization of the working fluid caused by locally applying a heat to the conduit, and a condensation of the vapor migrated to a site where a temperature and a pressure are low. Generally, in order to facilitate the vaporization of the working fluid and to allow the vapor to flow entirely in the conduit, non-condensable gas is evacuated from the conduit and only the working fluid is encapsulated in the thermosyphon. In the thermosyphon, the condensed working fluid is returned to the evaporating portion utilizing a capillary pressure or gravitationally. For example, a porous material such as a mesh, a sintered metallic sheet, a wire strand, narrow grooves etc. may be used as a wick for returning the working fluid to the evaporating portion. Alternatively, in case of returning the working fluid gravitationally to the evaporating portion, the condensing portion is situated higher than the evaporating portion. The thermoelectric element thus structured may also be called a heat pipe. Especially, in the heat pipe adapted to gravitationally return the liquid phase working fluid to the evaporating portion, a heat transporting direction is limited to a vertical direction from the upper side to the lower side. Therefore, the heat pipe of this kind is called a thermosyphon.

Basically, a straight or curved pipe is used as a container (or a casing) of the heat pipe or the thermosyphon. One end of the container is placed at a site where the temperature is high to serve as the evaporating portion (or heating portion), and other end of the container is placed at a site where the temperature is low to serve as the condensing portion (or cooling portion). In the container this structured, the working fluid vaporized at the evaporating portion flows toward the condensing portion, and the flow rate of the fluid reaches sonic speed. Then, the working fluid condensed at the condensing portion is returned to the evaporating portion through the wick provided on an inner wall of the container. If a flow channel for the vaporized working fluid and a flow channel for the condensed working fluid are too close to each other, a flow of the condensed working fluid toward the evaporating portion may be hindered by the vapor flow. In this case, the working fluid cannot be delivered sufficiently to the evaporating portion thereby deteriorating a heat transporting performance.

On the other hand, the loop heat pipe or thermosyphon is formed into a cyclic structure while connecting the evaporating portion with the condensing portion by a vapor pipe and a return pipe. That is, the flow channel for the vaporized working fluid and the flow channel for the condensed working fluid arc sufficiently isolated from each other. Therefore, in the loop heat pipe or thermosyphon, the flow of the condensed working fluid toward the evaporating portion will not be hindered by the vapor flow so that the heat transporting performance can be enhanced. One example of a heat accumulation type steam generator using the loop heat pipe is described in JP H1 0 2501 A.

In the loop heat pipe taught by JP H10 2501 A,
a switching valve is disposed in the fluid return pipe for returning the working fluid from the condensing portion to the evaporating portion. Therefore, a dryout of the heat pipe may be achieved by closing the switching valve to block the working fluid flowing toward the evaporating portion. Consequently, the working fluid disappears from the evaporating portion so that a heat transportation of the heat pipe is stopped. The heat transportation may be restarted by opening the switching valve thereby allowing the working fluid to flow downwardly toward the evaporating portion. Consequently, the working fluid is vaporized at the evaporation portion to resume the heat transportation. In this situation, however, the working fluid is delivered to the evaporating portion in the dry condition. Therefore, if the temperature of the evaporating portion is too high, an evaporation of the working fluid may be disturbed by a vapor film covering the dew drop of the working fluid. Such phenomenon is called Leidenfrost phenomenon. If the dew drop is covered with the vapor film, the working fluid cannot be contacted with an inner wall of the evaporating potion. Therefore, it is difficult for the working fluid to be heated and evaporated. JP H07-103679 A describes
a structure to prevent the Leidenfrost phenomenon. According to the teachings of
JP H07-103679 A, a structure comprises a needlelike protrusion formed by cutting and bending a tip of the metal strand of a mesh body, and the protrusion penetrates into the dew to transfer the heat directly to the dew.

As described, in the loop heat pipe or the loop thermosyphon (both devices will simply be called a "loop thermosyphon" hereafter), the working fluid is evaporated by an external heat, and the vapor of the working fluid flows toward the condensing portion where the temperature and the pressure is low to radiate the heat. For this reason, the loop thermosyphon is allowed to be operated automatically without requiring any specific power source, and heat transporting performance thereof is excellent. This characteristic is useful for the emergency cooling when emergency or abnormal situation happens in a heating facility or system. For instance, if the loop thermosyphon is used in the emergency cooling system for a core or a nuclear fuel storage facility of a nuclear reactor, a temperature of the nuclear reactor will not be raised abnormally even if a power is lost.

Such emergency situation is brought about a loss of power or cooling water. That is, in the emergency case, the temperature of the evaporating portion may have been raised abnormally when the loop thermosyphon is started. In this situation, if the working fluid is delivered to the evaporating portion, the heat transfer to the working fluid is disturbed by the afore-mentioned Leidenfrost phenomenon. Consequently, a cooling operation may be delayed, or the cooling operation may not be carried out. In order to avoid such disadvantages, the needlelike protrusion taught by JP H07-103679 A may be
applied to the inner wall of the evaporating portion. However, although the needlelike protrusion facilitates the heat transfer to the dew of the working fluid, it may not solve the Leidenfrost phenomenon completely. Therefore, the conventional loop thermosyphon has to be improved to be used in the emergency cooling system for the nuclear reactor.

JP H03 87561 A discloses a heat pipe type hot water supply apparatus with high temperature heat accumulator comprising a heat transfer device that transfers heat from a heat accumulator to a hot water reservoir tank. The heat transfer device comprises an evaporator and a condensing part which are connected to each other by a steam pipe and a liquid return pipe in a manner to form a cyclic conduit. A working fluid is encapsulated within heat transfer device and a flow control valve is interposed in the liquid return pipe. The evaporator comprises a pipe to which the heat of the heat accumulator is conducted. The inner wall of the pipe is provided with wire gauze from which needlelike projections project toward the inside of the pipe to penetrate through a dew of the working fluid.

Document US 3 935 063 shows an emergency cooling system according to the preamble of claim 1.

### DISCLOSURE OF THE INVENTION

The present invention has been conceived noting the above-mentioned technical problems, and it is therefore an object of the present invention is to provide an emergency cooling system using a loop thermosyphon that has an excellent cooling performance and that can be started immediately.

The present invention is applied to an emergency cooling system comprised of: a loop thermosyphon, in which an evaporating portion at which heat exchange with a cooling object takes place is connected with a condensing portion at which a heat radiation takes place through a vapor pipe and a return pipe in a manner to form a cyclic conduit; a condensable working fluid that is circulated within the loop thermosyphon to be evaporated by a heat of the cooling object at the evaporating portion, and to be condensed at the condensing portion to radiate the heat conducted from the cooling object; and a switching valve that is disposed on the return pipe to selectively allow the working fluid in a liquid phase to be returned from the condensing portion to the evaporating portion. In order to achieve the above-mentioned object, according to the present invention, the emergency cooling system is provided with a heat transfer pipe, which is arranged in the evaporating portion and to which the heat of the cooling object is conducted; a heat transfer protrusion that is formed on an inner wall of the heat transfer pipe to penetrate through a dew of the working fluid; and a preheating portion, which is formed within a portion of the return pipe connected to the heat transfer pipe, and to which the heat of the cooling object is conducted.

The preheating portion is formed within the portion of the return pipe extending inside of the cooling object. Optionally, the preheating portion may be formed into a meander pipe by bending the return pipe.

The condensing portion is situated higher than the evaporating portion, and the storage tank is connected with a lower portion of the condensing portion to hold the working fluid in the liquid phase. In addition, the emergency cooling system according to the present invention may be used to cool a container holding an atomic fuel.

The evaporating portion is comprised of: an upper header pipe; an lower header pipe; and a plurality of the heat transfer pipes arranged in parallel with one another while being connected with the upper header pipe and the lower header pipe. On the other hand, the condensing portion is comprised of: another upper header pipe; another lower header pipe; a plurality of a radiating pipes arranged in parallel with one another while being connected with said another upper header pipe and said another lower header pipe; and a plurality of radiator fins mounted on the radiating pipes to radiate the heat to the air.

Thus, according to the present invention, the switching valve is opened to deliver the working fluid in the liquid phase to the evaporating portion to cool the cooling object in case of emergency. In addition, the return pipe leading the working fluid in the liquid phase partially serves as the preheating portion receiving the heat from the cooling object. In case of emergency, a temperature of the cooling object is raised significantly. Therefore, a temperature of the working fluid flowing toward the evaporating portion is raised almost to the saturation temperature during passing through the preheating portion. In this situation, since the evaporating portion has already been heated by the heat of the cooling object, the liquid phase working fluid is heated drastically to be turned into dews covered with a vapor film. However, a plurality of the protrusions are formed on the inner surface of the heat transfer pipes to penetrate through the dews of the working fluid. Therefore, the dews of the working fluid is allowed to be heated from inside through the protrusion. Thus, the heat can be conducted efficiently to the dews of the working fluid that has been heated preliminary. For these reasons, the Leidenfrost phenomenon can be solved to facilitate the heat conduction to the liquid phase working fluid. That is, the cooling object can be cooled efficiently through the heat transfer pipes. Consequently, the working fluid is vaporized and flows toward the condensing portion. Then, the heat transported by the working fluid in the vapor phase is radiated from the condensing portion and the working fluid is condensed again. The working fluid thus condensed is again delivered to the evaporating portion through the return pipe to be evaporated while drawing the heat from the cooling object. Thus, in the emergency cooling system, the heat of the cooling object is transported and released to outside by the working fluid circulating in the system while being evaporated and condensed alternately. In addition, according to the emergency cooling system of the present invention, the liquid phase working fluid and the vapor phase working fluid flow through different routes. Therefore, the liquid phase working fluid and the vapor phase working fluid will not conflict with each other so that the working fluid can be returned to the evaporating portion in ample amounts. For this reason, a heat transporting efficiency and a cooling performance of the emergency cooling system can be enhanced. In addition, the emergency cooling system of the present invention can be operated without requiring an external power. Therefore, the cooling object can be cooled certainly even if the electric power is lost.

As described, according to the present invention, the condensing portion is situated higher than the evaporating portion, and the storage tank is connected with the lower portion of the condensing portion. That is, the working fluid in the liquid phase is allowed to be returned gravitationally to the evaporating portion. Therefore, the working fluid is allowed to be returned certainly to the evaporating portion so that the dry-out of the evaporating portion can be prevented certainly, and the cooling object can be cooled certainly.

The emergency cooling system of the present invention may also be used to cool a containment of the atomic fuel which may cause a serious accident.

In addition, even a large cooling object can be cooled efficiently by the emergency cooling system of the present invention using a single loop thermosyphon.

### BRIEF DESCRIPTION OF THE DRAWINGS

Fig. 1 is a view schematically showing a preferred example of the present invention.
Fig. 2 is a partial cross-sectional view showing a heat-transfer protrusion according to the present invention.

### BEST MODE FOR CARRYING OUT THE INVENTION

Next, a preferred example of the present invention will be explained hereinafter. The present invention may be applied to a heat generating facility that potentially causes an accident under a situation where a temperature thereof cannot be controlled. Specifically, the present invention is applied to a facility for converting thermal energy resulting from an exothermal reaction into a mechanical power or an electric power. In the preferred example, the present invention is applied to a fuel container of a nuclear plant. The loop thermosyphon of the present invention is entirely formed into a cyclic pathway, and comprised of an evaporating portion at which a heat of the cooling object is drawn, and a condensing portion from which the heat is radiated. The evaporating portion and the condensing portion are connected through a vapor pipe and a return pipe, and a condensable working fluid encapsulated therein returns gravitationally from the condensing portion to the evaporating portion. In order to enhance a cooling performance, a heat receiving area and a radiating area may be enlarged. As described, the cooling system according to the present invention is used for emergencies. Therefore, a switching valve is disposed in the return pipe to start the system on an emergency basis. To this end, a fuse closing the valve is unlocked automatically or broken in case of emergency to open the valve without requiring external power.

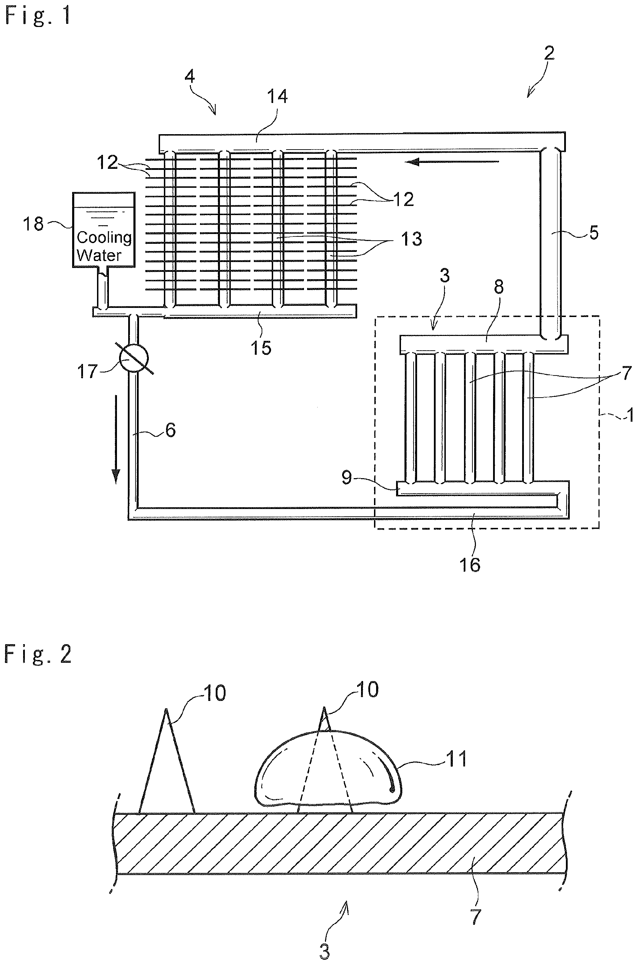

Referring now to Fig. 1, there is shown the preferred example of the emergency cooling system applied to a nuclear fuel container. In order to cool the containment 1 naturally even if the power is lost, the emergency cooling system is adapted to radiate heat of the containment 1 without using an external power. To this end, the emergency cooling system is comprised of a loop thermosyphon 2 for transporting the heat from the containment 1 to the air. That is, the loop thermosyphon 2 is a thermoelectric element (or heat transfer means) adapted to transport the heat in the form of latent heat of condensable working fluid. Specifically, the loop thermosyphon 2 is comprised of an evaporating portion 3 where an evaporation of the working fluid takes place, and a condensing portion 4 where a condensation of the working fluid takes place. The evaporating portion 3 and the condensing portion 4 are connected through a vapor pipe 5 and a return pipe 6 in a circular manner.

The evaporating portion 3 is arranged inside of the containment 1 in a manner to exchange the heat with the containment 1. According to the preferred example shown in Fig. 1, the evaporating portion 3 is comprised of a plurality of a heat transfer pipe 7 arranged in parallel with one another, an upper header pipe 8, and a lower header pipe 9. An upper end of each heat transfer pipe 7 is individually connected with the upper header pipe 8, and a bottom end of each heat transfer pipe 7 is individually connected with the lower header pipe 9. Such piping structure provides an enlarged surface area of the evaporating portion 3. As shown in Fig. 2, a plurality of heat transfer protrusions 10 adapted to penetrate into dews resulting from the Leidenfrost phenomenon are formed on inner walls of the heat transfer pipe 7 and the header pipes 8 and 9. As illustrated in Fig. 2, the heat transfer protrusion 10 is formed into a needlelike conical shape so that the protrusion 10 can penetrate into a dew 11 utilizing a strenuous movement of the dew 11 caused by heat.

The condensing portion 4 is situated in the air above the level of the evaporating portion 3. Specifically, the condensing portion 4 is comprised of a plurality of a radiating pipes 13 arranged in parallel with one another, an upper header pipe 14, and a lower header pipe 15. In order to enlarge a radiation area, a plurality of radiator fins 12 are mounted to each radiating pipe 13, and an upper end of each radiating pipe 13 is connected individually with the upper header pipe 14 and a bottom end of each radiating pipe 13 is connected individually with the lower header pipe 15.

The upper header pipe 8 of the evaporating portion 3 is connected with the upper header pipe 13 of the condensing portion 4 through the vapor pipe 5, and the lower header pipe 9 of the evaporating portion 3 is connected with the lower header pipe 15 of the condensing portion 4 through the return pipe 6. Accordingly, the loop thermosyphon 2 is entirely formed into a circuit conduit. Here, a diameter of the vapor pipe 5 is larger than that of the return pipe 6. In the loop thermosyphon 2 thus structured, condensable working fluid such as water or alcohol is encapsulated. In order to allow the working fluid to circulate smoothly within the loop thermosyphon 2, and to expedite an evaporation of the working fluid, it is preferable to evacuate incondensable gas such as the air from the loop thermosyphon 2.

A portion of the return pipe 6 within a predetermined length from the evaporating portion 3 serves as a preheating portion 16. Therefore, a temperature of the liquid phase working fluid flowing through the preheating portion 16 can be heated preliminary by exchanging heat with containment 1. To this end, one of the end portions of the return pipe 6 within a predetermined length from the evaporating portion 3 extends through the containment 1. Optionally, the preheating portion 16 may be formed by partially bending the preheating portion 16 to form a meander pipe so that the containment 1 may also be cooled by the preheating portion 16.

In order to block the flow of the working fluid in the liquid phase, a switching valve 17 is disposed on a predetermined portion of the return pipe 6 between the condensing portion 4 and the preheating portion 16. The switching valve 17 is opened in case of emergency without requiring external power such as electricity. For this purpose, the switching valve 17 is closed by a fuse or a locking mechanism under the normal condition, and the fuse or the locking mechanism is melted or broken to open the switching valve 17 in case of emergency so as to cool the containment 1 urgently.

A storage tank 18 for holding the working fluid in the liquid phase is connected with a lower portion of the condensing portion 4, more specifically, to the lower header pipe 15. Given that the switching valve 17 is closed, the working fluid condensed into the liquid phase at the condensing portion 4 flows gradually into the storage tank 18. Since the storage tank 18 is connected to the cyclic conduit, the incondensable gas such as the air is also evacuated from the storage tank 18 so that only the working fluid is allowed to enter into the storage tank 18.

Next, an action of the emergency cooling system thus structured will be explained hereinafter. Provided that the containment 1 is in the normal condition, the temperature of the containment 1 is not especially high and the cooling operation of the loop thermosyphon 2 will not be carry out. Therefore, the switching valve 17 is closed. In this situation, the working fluid is not delivered to the evaporating portion 3 so that the evaporating portion 3 is dried out. Therefore, the heat transportation utilizing the evaporation and the condensation of the working fluid is not caused. By contrast, if the power is lost accidentally thereby causing a cessation of an electric cooling system, the temperature of the containment 1 is raised excessively by a heat resulting from a collapse of the fuel rod. The switching valve 17 is opened in response to such an emergency thereby allowing the working fluid in the condensing portion 4 and the storage tank 18 to flow down through the return pipe 6 gravitationally (i.e., by a hydraulic head pressure).

As described, the portion of the return pipe 6 within a predetermined length from the evaporating portion 3 serves as the preheating portion 16. Therefore, the working fluid in liquid phase is heated at the preheating portion 16 so that the temperature of the working fluid is raised and the working fluid is evaporated partially. In this situation, the Leidenfrost phenomenon can be inhibited to facilitate the heat transportation to the liquid phase working fluid by forming the heat transfer protrusions 10 shown in Fig. 2 on the inner wall of the preheating portion 16. Consequently, the working fluid preliminary heated almost to the saturation temperature is delivered to the evaporating portion 3. According to the example shown in Fig. 1, the working fluid is delivered initially to the lower header pipe 9, and the heat transfer pipes 7 are gradually filled with the working fluid. That is, the fluid level in the heat transfer pipe 7 rises with an increase in quantity of the working fluid delivered to the lower header pipe 15.

Before the power was lost accidentally, the evaporating portion 3 has been kept in the dry condition so that the temperatures of the lower header pipe 9 and the heat transfer pipes 7 have been raised considerably. Therefore, the working fluid delivered to the lower header pipe 9 is contacted sequentially with the inner walls of the lower header pipe 9 and the heat transfer pipe 7 and evaporated rapidly. As a result, the dews 11 covered with the vapor of the working fluid are created. That is, the Leidenfrost phenomenon occurs at least locally. However, a plurality of the heat transfer protrusions 10 shown in Fig. 2 are formed on the inner walls of the lower header pipe 9 and the heat transfer pipe 7. Those protrusions 10 penetrate into the dews 11 of the working fluid so that the dews 11 are heated by the protrusions 10 from the inside. If the surface of the dew 11 is covered with the vapor film, the dew 11 is prevented from being contacted with the inner walls of the lower header pipe 9 and the heat transfer pipes 7, and this makes difficult to transfer the heat to the to the dews 11. However, the heat can be conducted efficiently to the dews 11 by the heat transfer protrusions 10.

The liquid phase working fluid flowing through the return pipe 6 has already been heated to almost the saturation temperature by the preheating portion 16 on the way to the evaporating portion 3. Therefore, the working fluid is immediately evaporated when reaches the evaporating portion 3. However, the temperature of the evaporating potion 3 has been raised considerably after the occurrence of emergency. For this reason, even if the working fluid in the liquid phase has already been heated nearly to the saturation temperature, the Leidenfrost phenomenon may be caused in this situation. According to the preferred example, however, the heat is conducted efficiently to the dews 11 of the working fluid resulting from the Leidenfrost phenomenon from inside by the protrusions 10. Therefore, the heat transfer to the working fluid can be facilitated to vaporize the working fluid rapidly in large quantity by thus preliminary heating the working fluid almost to the saturation temperature while solving film boiling.

The vapor thus generated by the heat transfer pipes 7 ascends to the upper header pipe 8, and then migrates to the condensing portion 4 exposed to the air to be cooled. Therefore, the heat of the vaporized working fluid is radiated through the radiating pipes 13 and the radiating fins 12. Thus, the heat of the containment 1 is conveyed in the form of latent heat and radiated to the air so that the containment 1 is cooled naturally indirectly. After radiating the heat, the temperature of the working fluid is lowered so that the working fluid is condensed to be brought into the liquid phase, and falls to the lower header pipe 15. As described, the condensing portion 4 is situated higher than the evaporating portion 3 so that the working fluid thus brought into liquid phase is allowed to be returned gravitationally (i.e., by a hydraulic head pressure) to the evaporating portion 3 through the return pipe 6. The working fluid thus delivered again to the evaporating portion 3 is evaporated by the heat of the containment 1. In this situation, the temperature of the inner walls of the lower header pipe 9 and the heat transfer pipes 7 has been lowered to some extent by the working fluid delivered thereto previously. Therefore, the evaporation of the working fluid can be facilitated by thus heating the liquid phase working fluid to some extent by the preheating portion 16 while preventing the occurrence of the Leidenfrolst phenomenon. Here, even if the Leidenfrost phenomenon occurs, the heat is transmitted swiftly to the dews 11 of the working fluid by the heat transfer protrusions 10 formed on the inner walls of the lower header pipe 9 or the heat transfer pipes 7 forming the evaporating portion 3. Therefore, the evaporation of the working fluid can be facilitated in case of Leidenfrost phenomenon.

Thus, according to the emergency cooling system of the present invention, the working fluid is delivered automatically to the cooling object by opening the switching valve 17, and the heat can be transported by the working fluid continuously to the air. Therefore, even if the power is lost, the temperature of the cooling object such as the containment 1 can be maintained to be lower than a temperature which might destroy the cooling object 1. Especially, even if the temperature of the cooling object or the evaporating portion 3 is abnormally high in the beginning of the emergency cooling, the preheating portion 16 and the heat transfer protrusions 10 prevent an occurring of the Leidenfrost phenomenon so that the heat transmission to the working fluid and the evaporation of the working fluid can be facilitated. Therefore, the cooling object can be cooled immediately and certainly in the begging of emergency situation.

Here, although the emergency cooling system is applied to the containment 1 holding the atomic fuel in the preferred example, the emergency cooling system of the present invention may also be applied to other facilities necessary to be cooled in the emergency situation.

## Claims

1. An emergency cooling system suitable for a fuel container of a nuclear power plant, **characterized by**:
a loop thermosyphon (2), in which an evaporating portion (3) at which heat exchange with a cooling object (1) takes place is connected with a condensing portion (4) at which a heat radiation takes place through a vapor pipe (5) and a return pipe (6) in a manner to form a cyclic conduit;
a condensable working fluid circulating within the loop thermosyphon (2) to be evaporated by a heat of the cooling object (1) at the evaporating portion (3), and to be condensed at the condensing portion (4) to radiate the heat conducted from the cooling object (1);
a switching valve (17) that is disposed on the return pipe (6) to selectively allow the working fluid in a liquid phase to be returned from the condensing portion (4) to the evaporating portion (3); wherein a heat transfer pipe (7), which is arranged in the evaporating portion (3) and to which the heat of the cooling object (1) is conducted;
a heat transfer protrusion (10) that is formed on an inner wall of the heat transfer pipe (7) to penetrate through a dew (11) of the working fluid; and
a preheating portion (16) having a predetermined length and suitable for raising a temperature of the working fluid flowing toward the evaporating portion (3) almost to the saturation temperature, which is formed within a portion of the return pipe (6) connected to the heat transfer pipe (7), and to which the heat of the cooling object (1) is conducted.

2. The emergency cooling system as claimed in claim 1,
wherein the condensing portion (4) is situated higher than the evaporating portion (3); and
further comprising a storage tank (18) for holding the working fluid in the liquid phase that is connected with a lower portion of the condensing portion (4).

3. The emergency cooling system as claimed in claim 1 or 2, wherein the cooling object (1) includes a containment for holding an atomic fuel.

4. The emergency cooling system as claimed in any of claims 1 to 3,
wherein the evaporating portion (3) is comprised of:
an upper header pipe (8);
an lower header pipe (9); and
a plurality of the heat transfer pipes (7) arranged in parallel with one another while being connected with the upper header pipe (8) and the lower header pipe (9); and
wherein the condensing portion (4) is comprised of:
another upper header pipe (14);
another lower header pipe (15);
a plurality of a radiating pipes (13) arranged in parallel with one another while being connected with said another upper header pipe (14) and said another lower header pipe (15); and
a plurality of radiator fins (12) mounted on the radiating pipes (13) to radiate the heat to the air.

5. The emergency cooling system as claimed in any of claims 1 to 4, wherein the preheating portion (16) is formed within the portion of the return pipe (6) extending inside of the cooling object.

6. The emergency cooling system as claimed in any of claims 1 to 5, wherein the preheating portion (16) includes a meander pipe formed by bending the return pipe (6).

## Patentansprüche

1. Notkühlsystem, das für einen Brennstoffbehälter eines Kernkraftwerks geeignet ist, **gekennzeichnet durch**:
einen Kreisthermosiphon (2), in dem ein Verdampfungsabschnitt (3), an dem ein Wärmeaustausch mit einem Kühlgegenstand (1) stattfindet, mit einem Kondensationsabschnitt (4), an dem eine Wärmestrahlung stattfindet, durch eine Dampfrohrleitung (5) und eine Rücklaufrohrleitung (6) in einer Weise verbunden ist, um eine Kreislaufleitung auszubilden;
ein kondensierbares Arbeitsfluid, das innerhalb des Kreisthermosiphons (2) zirkuliert, um durch eine Wärme des Kühlgegenstands (1) an dem Verdampfungsabschnitt (3) verdampft zu werden und um an dem Kondensationsabschnitt (4) kondensiert zu werden, um von dem Kühlgegenstand (1) geleitete Wärme abzustrahlen;
ein Umschaltventil (17), das an der Rücklaufrohrleitung (6) angeordnet ist, um dem Arbeitsfluid in einer Flüssigkeitsphase wahlweise zu ermöglichen, von dem Kondensationsabschnitt (4) zu dem Verdampfungsabschnitt (3) zurückzulaufen;
eine Wärmeübertragungsrohrleitung (7), die in dem Verdampfungsabschnitt (3) angeordnet ist und zu der Wärme des Kühlgegenstands (1) geleitet wird;
einen Wärmeübertragungsvorsprung (10), der an einer Innenwand der Wärmeübertragungsrohrleitung (7) ausgebildet ist, um ein Tauwasser (11) des Arbeitsfluides zu durchdringen; und
einen Vorwärmabschnitt (16) mit einer vorbestimmten und zum Erhöhen einer Temperatur des Arbeitsfluides, das in Richtung des Verdampfungsabschnitts (3) strömt, auf fast die Sättigungstemperatur geeignet, der innerhalb eines Abschnitts der Rücklaufrohrleitung (6) ausgebildet ist, der mit der Wärmeübertragungsrohrleitung (7) verbunden ist, und zu dem die Wärme des Kühlgegenstands (1) geleitet wird.

2. Notkühlsystem gemäß Anspruch 1,
wobei der Kondensationsabschnitt (4) höher als der Verdampfungsabschnitt (3) gelegen ist; und
des Weiteren mit einem Speichertank (18) zum Aufnehmen des Arbeitsfluides in der Flüssigkeitsphase, der mit einem unteren Abschnitt des Kondensationsabschnitts (4) verbunden ist.

3. Notkühlsystems gemäß Anspruch 1 oder 2, wobei der Kühlgegenstand (1) einen Sicherheitsbehälter zum Aufnehmen von einem atomaren Brennstoff enthält.

4. Notkühlsystem gemäß einem der Ansprüche 1 bis 3,
wobei der Verdampfungsabschnitt (3) Folgendes aufweist:
ein oberes Vorrohr (8);
ein unteres Vorrohr (9); und
eine Vielzahl von Wärmeübertragungsrohrleitungen (7), die parallel zueinander angeordnet sind, während sie mit dem oberen Vorrohr (8) und dem unteren Vorrohr (9) verbunden sind; und
wobei der Kondensationsabschnitt (4) Folgendes aufweist:
ein anderes oberes Vorrohr (14);
ein anderes unteres Vorrohr (15);
eine Vielzahl von Strahlungsrohrleitungen (13), die parallel zueinander angeordnet sind, während sie mit dem anderen oberen Vorrohr (14) und dem anderen unteren Vorrohr (15) verbunden sind; und
eine Vielzahl von Radiatorrippen (12), die an den Strahlungsrohrleitungen (13) montiert sind, um Wärme an die Luft abzustrahlen.

5. Notkühlsystem gemäß einem der Ansprüche 1 bis 4, wobei der Vorwärmabschnitt (16) innerhalb des Abschnitts der Rücklaufrohrleitung (6) ausgebildet ist, der sich im Inneren des Kühlgegenstands erstreckt.

6. Notkühlsystem gemäß einem der Ansprüche 1 bis 5, wobei der Vorwärmabschnitt (16) eine Mäanderrohrleitung enthält, die durch Biegen der Rücklaufrohrleitung (6) ausgebildet ist.

## Revendications

1. Système de refroidissement d'urgence approprié pour un contenant de combustible d'une centrale nucléaire, **caractérisé par** :
une boucle thermosiphon (2), dans laquelle une portion d'évaporation (3) au niveau de laquelle un échange de chaleur avec un objet de refroidissement (1) a lieu est raccordée à une portion de condensation (4) au niveau de laquelle un rayonnement thermique a lieu à travers un tuyau de vapeur (5) et un tuyau de retour (6) de manière à former un conduit cyclique ;
un fluide actif condensable circulant dans la boucle thermosiphon (2) pour être évaporé lors d'une chaleur de l'objet de refroidissement (1) au niveau de la portion d'évaporation (3), et pour être condensé au niveau de la portion de condensation (4) pour faire rayonner la chaleur conduite depuis l'objet de refroidissement (1) ;
une vanne de commutation (17) qui est disposée sur le tuyau de retour (6) pour permettre sélectivement au fluide actif dans une phase liquide d'être renvoyée de la portion de condensation (4) à la portion d'évaporation (3) ;
dans lequel
un tuyau de transfert de chaleur (7), qui est agencé dans la portion d'évaporation (3) et jusqu'auquel la chaleur de l'objet de refroidissement (1) est conduite ;
une saillie de transfert de chaleur (10) qui est formée sur une paroi intérieure du tuyau de transfert de chaleur (7) pour pénétrer à travers une rosée (11) du fluide actif ; et
une portion de préchauffage (16) ayant une longueur prédéterminée et appropriée pour faire monter une température du fluide actif s'écoulant vers la portion d'évaporation (3) presque jusqu'à la température de saturation, qui est formée dans une portion du tuyau de retour (6) raccordée au tuyau de transfert de chaleur (7), et à laquelle la chaleur de l'objet de refroidissement (1) est conduite.

2. Système de refroidissement d'urgence selon la revendication 1,
dans lequel la portion de condensation (4) se situe plus haut que la portion d'évaporation (3) ; et
comprenant en outre un réservoir de stockage (18) pour contenir le fluide actif dans la phase liquide qui est raccordé à une portion inférieure de la portion de condensation (4).

3. Système de refroidissement d'urgence selon la revendication 1 ou 2, dans lequel l'objet de refroidissement (1) inclut un confinement pour contenir un combustible atomique.

4. Système de refroidissement d'urgence selon l'une quelconque des revendications 1 à 3,
dans lequel la portion d'évaporation (3) est composée de :
un tuyau collecteur supérieur (8) ;
un tuyau collecteur inférieur (9) ; et
une pluralité de tuyaux de transfert de chaleur (7) agencés parallèlement les uns aux autres tout en étant raccordés au tuyau collecteur supérieur (8) et au tuyau collecteur inférieur (9) ; et
dans lequel la portion de condensation (4) est composée de :
un autre tuyau collecteur supérieur (14) ;
un autre tuyau collecteur inférieur (15) ;
une pluralité de tuyaux de rayonnement (13) agencés parallèlement les uns aux autres tout en étant raccordés audit autre tuyau collecteur supérieur (14) et audit autre tuyau collecteur inférieur (15) ; et
une pluralité d'ailettes de radiateur (12) montées sur les tuyaux de rayonnement (13) pour faire rayonner la chaleur vers l'air.

5. Système de refroidissement d'urgence selon l'une quelconque des revendications 1 à 4, dans lequel la portion de préchauffage (16) est formée dans la portion du tuyau de retour (6) s'étendant à l'intérieur de l'objet de refroidissement.

6. Système de refroidissement d'urgence selon l'une quelconque des revendications 1 à 5, dans lequel la portion de préchauffage (16) inclut un tuyau sinueux formé en pliant le tuyau de retour (6).
